# EUROPEAN PATENT SPECIFICATION

(11) **EP 4 317 764 B1**
(45) Date of publication and mention of the grant of the patent: **03.06.2026**
(21) Application number: 22781046.2
(22) Date of filing: 30.03.2022
(51) Int. Cl.: F17C 13/12, B63B 25/16, F17C 3/02

(54) **MULTIPLE-SHELL TANK AND SHIP**
MEHRSCHALIGER TANK UND SCHIFF
RÉSERVOIR À PAROIS MULTIPLES ET NAVIRE

(30) Priority: 31.03.2021 JP 2021061365
(43) Date of publication of application: 07.02.2024
(73) Proprietor: KAWASAKI JUKOGYO KABUSHIKI KAISHA, Kobe-shi, Hyogo 650-8670 (JP)
(72) Inventor: SHIMODA, Taichiro, Chuo-ku, Kobe-shi, Hyogo 650-8670 (JP); TOMINAGA, Haruhiko, Chuo-ku, Kobe-shi, Hyogo 650-8670 (JP); MOCHIDA, Kunihiko, Chuo-ku, Kobe-shi, Hyogo 650-8670 (JP); TANAKA, Shin, Chuo-ku, Kobe-shi, Hyogo 650-8670 (JP); HOSONO, Takamichi, Chuo-ku, Kobe-shi, Hyogo 650-8670 (JP); INOHARA, Masayoshi, Chuo-ku, Kobe-shi, Hyogo 650-8670 (JP)
(74) Representative: Arnold & Siedsma
(86) International application number: PCT/JP2022/015825
(87) International publication number: WO 2022/210835

(56) References cited:
- JP-A- 2015 004 383
- JP-A- 2015 004 383
- JP-A- 2019 157 868
- JP-A- 2019 157 868
- JP-A- 2020 104 787
- JP-A- 2020 104 787
- JP-A- S5 997 397
- JP-A- S5 997 397

## Description

### Technical Field

The present disclosure relates to a multiple-shell tank and a ship including the multiple-shell tank, particularly to a piping structure extending through a space between adjacent shells of the multiple-shell tank.

### Background Art

A multiple-shell tank that stores a cryogenic liquefied gas and a ship including the multiple-shell tank have been known. PTL 1 discloses this type of multiple-shell tank.

The multiple-shell tank (liquid gas storage device) of PTL 1 includes: a tank storing a liquid gas; an inner shell covering the tank; and an outer shell covering the inner shell. A cold insulation space between the tank and the inner shell is filled with a vaporized gas generated by vaporization of the liquid gas. A space between the inner shell and the outer shell is filled with a nitrogen gas. A top portion of the tank includes a dome through which a cargo handing pipeline for the liquid gas extends. The dome includes a vaporized gas pipe through which the vaporized gas generated in the tank is guided to a heater. The vaporized gas heated by the heater is supplied to the cold insulation space through a supply pipe.

### Citation List

### Patent Literature

PTL 1: Japanese Laid-Open Patent Application Publication No. 6-323498;

PTL 2: JP 2020 104787 A.

### Summary of Invention

### Technical Problem

As described in PTL 1, the multiple-shell tank including multiple tanks (shells) may include a pipe which extends through an inter-shell space to an outside of the multiple-shell tank to supply a gas to the inter-shell space and discharge the gas from the inter-shell space. Especially when a combustible fluid or a cryogenic fluid flows through such pipe, to prepare for leakage at a joint portion or the like just in case, the pipe is desirably laid so as not to extend through another inter-shell space located outside the inter-shell space through which the pipe extends. In PTL 1, the inner shell includes a projecting portion that penetrates the outer shell and projects to be exposed to an outside, and the supply pipe penetrates the projecting portion and extends into the cold insulation space without extending through another inter-shell space located outside. The projecting portion of the inner shell is located at a position away from the dome at which pipes of the tank are collectively located.

A portion (hereinafter, a pipe penetrating portion) of a shell through which a pipe penetrates requires reinforcement and strength evaluation. Moreover, when the shell has a heat preventing property, the pipe penetrating portion is also required to be subjected to special heat preventing processing. Due to these reasons, as the number of pipe penetrating portions increases, workloads in manufacture and targets to be inspected at the time of maintenance increase. Therefore, it is desirable that the number of pipe penetrating portions be small. Furthermore, when the pipe penetrating portions are dispersedly located at the multiple-shell tank, the accessibility to valves and meters located at the pipes and the ease of maintenance of the valves and the meters deteriorate. Therefore, it is desirable that the pipe penetrating portions be collectively located.

The present disclosure was made under these circumstances, and an object of the present disclosure is to propose a piping structure in a multiple-shell tank, the piping structure being a structure by which pipe penetrating portions of a shell may be collectively located.

### Solution to Problem

A multiple-shell tank according to the present disclosure includes:
an inner shell;
an outer shell accommodating the inner shell;
an outermost shell accommodating the inner shell and the outer shell; and
an inter-shell pipe extending through a space between the inner shell and the outer shell, wherein:
   the inner shell includes an inner shell main body and an inner shell projecting portion that extends from the inner shell main body, penetrates the outermost shell, and projects to an outside of the outermost shell;
   the outer shell includes an outer shell main body covering the inner shell main body and an outer shell projecting portion that penetrates the outermost shell, projects to the outside of the outermost shell, and surrounds at least a part of the inner shell projecting portion;
   at least a part of the outer shell projecting portion includes an outer shell exposed portion that is exposed to the outside of the outermost shell; and
   the inter-shell pipe extends through a space between the inner shell main body and the outer shell main body, extends through a space between the inner shell projecting portion and the outer shell projecting portion, penetrates the outer shell exposed portion of the outer shell projecting portion, and extends to the outside.

Moreover, a multiple-shell tank according to the present disclosure includes:
an inner shell;
an outer shell accommodating the inner shell;
an outermost shell accommodating the inner shell and the outer shell; and
an inter-shell pipe extending through a space between the inner shell and the outer shell, wherein:
   the inner shell includes an inner shell main body and an inner shell projecting portion that extends from the inner shell main body, penetrates the outer shell and the outermost shell, and projects to an outside of the outermost shell;
   the outer shell includes an outer shell main body covering the inner shell main body;
   at least a part of the inner shell projecting portion includes an inner shell exposed portion that is exposed to the outside of the outermost shell; and
   the inter-shell pipe extends through a space between the inner shell main body and the outer shell main body, penetrates the inner shell projecting portion, extends through an inside of the inner shell projecting portion, penetrates the inner shell exposed portion of the inner shell projecting portion, and extends to the outside.

Furthermore, a multiple-shell tank according to the present disclosure includes:
an inner shell;
an outer shell accommodating the inner shell;
an outermost shell accommodating the inner shell and the outer shell;
an inter-shell pipe extending through a space between the inner shell and the outer shell; and
an inner shell pipe through which an inside of the inner shell and an outside communicate with each other, wherein:
   the inner shell includes an inner shell main body;
   the outer shell includes an outer shell main body covering the inner shell main body and an outer shell projecting portion that extends from the outer shell main body, penetrates the outermost shell, and projects to the outside of the outermost shell;
   at least a part of the outer shell projecting portion includes an outer shell exposed portion that is exposed to the outside of the outermost shell;
   the inter-shell pipe extends through a space between the inner shell main body and the outer shell main body, extends through an inside of the outer shell projecting portion, penetrates the outer shell exposed portion of the outer shell projecting portion, and extends to the outside; and
   the inner shell pipe extends through an inside of the inner shell main body, penetrates the inner shell main body, extends through the inside of the outer shell projecting portion, penetrates the outer shell exposed portion of the outer shell projecting portion, and extends to the outside.

A ship according to the present disclosure includes a hull and the multiple-shell tank supported by the hull.

According to the multiple-shell tank configured as above and the ship including the multiple-shell tank, the pipe penetrating portions of the multiple-shell tank are collectively located at the outer shell projecting portion and the inner shell projecting portion (or one of the inner shell projecting portion and the outer shell projecting portion). Since the pipe penetrating portions of the multiple-shell tank are collectively located as above, the improvement of the work efficiency at the time of the construction of the tank can be expected. Moreover, since the pipe penetrating portions are collectively located, maintenance targets are collectively located. Therefore, at the time of the maintenance of the pipe penetrating portions and valves, meters, and the like located at pipes extending through the pipe penetrating portions, the improvements of the ease of maintenance and the accessibility can be expected.

In addition, according to the multiple-shell tank configured as above and the ship including the multiple-shell tank, the inter-shell pipe penetrates the outer shell projecting portion or the inner shell projecting portion and extends to an outside, and does not extend through a space between the outer shell and the outermost shell. Therefore, the fluid flowing through the inter-shell pipe can be prevented from leaking to the space between the outer shell and the outermost shell.

### Advantageous Effects of Invention

The present disclosure can propose the piping structure in the multiple-shell tank, the piping structure being a structure by which the pipe penetrating portions of the shell may be collectively located.

### Brief Description of Drawings

FIG. 1 is a schematic side view of a ship including multiple-shell tanks according to an embodiment.
FIG. 2 is a schematic sectional view of the multiple-shell tank to which a piping structure according to First Example is applied.
FIG. 3 is a schematic sectional view of the multiple-shell tank to which the piping structure according to First Example is applied.
FIG. 4 is a schematic sectional view of the multiple-shell tank to which the piping structure according to Second Example is applied.
FIG. 5 is a schematic sectional view of the multiple-shell tank to which the piping structure according to Third Example is applied.
FIG. 6 is a schematic sectional view of the multiple-shell tank to which the piping structure according to Fourth Example is applied.
FIG. 7 is a schematic sectional view of the multiple-shell tank to which the piping structure according to Fifth Example is applied.

### Description of Embodiments

Hereinafter, an embodiment of the present disclosure will be described with reference to the drawings. In the present description, the term "inside" denotes a side closer to a center portion of a space in an inner shell of a multiple-shell tank, and the term "outside" denotes a side farther from the center portion of the space in the inner shell of the multiple-shell tank.

### Schematic Configuration of Ship 1

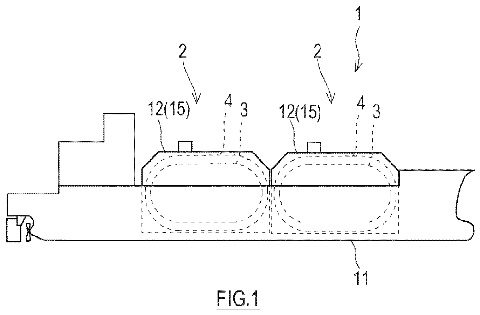

FIG. 1 is a schematic side view of a ship 1 including multiple-shell tanks 2 according to the present embodiment. As shown in FIG. 1, the ship 1 includes at least one multiple-shell tank 2 and a hull 11 on which the multiple-shell tank 2 is mounted. The ship 1 is a liquefied gas carrier that carries a cryogenic liquefied gas. Examples of the liquefied gas include LNG, liquefied nitrogen, liquefied hydrogen, and liquefied helium.

### Schematic Configuration of Multiple Shell Tank 2

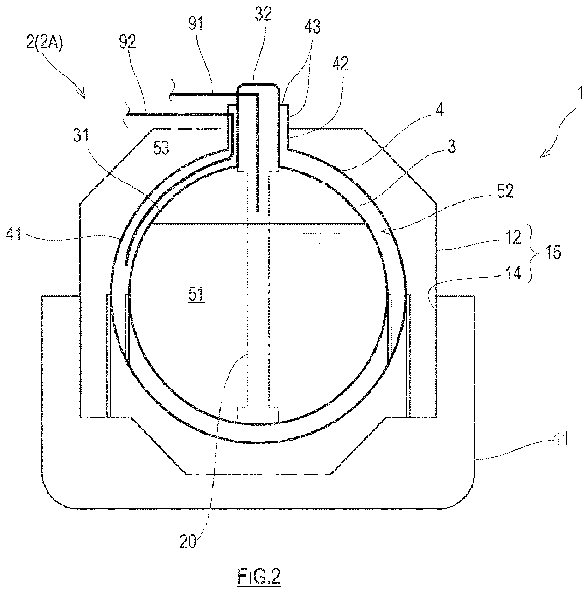

FIG. 2 is a schematic sectional view of the multiple-shell tank 2 (2A) to which a piping structure according to First Example is applied. As shown in FIGS. 1 and 2, the multiple-shell tank 2 includes an inner shell 3, an outer shell 4 accommodating the inner shell 3, and an outermost shell 15 accommodating the inner shell 3 and the outer shell 4. The outermost shell 15 according to the present embodiment includes: a tank cover 12 covering an upper portion of the outer shell 4; and a holding wall 14 covering a side portion and bottom portion of the outer shell 4. Instead of the tank cover 12, part of the hull 11 may cover the upper portion of the outer shell 4. The holding wall 14 may be, for example, part of the hull 11.

In the present embodiment, each of the inner shell 3 and the outer shell 4 has a spherical shape. Examples of the spherical shape include a true spherical shape, and in addition, a capsule shape and an oval shape. Each of the shapes of the inner shell 3 and the outer shell 4 is not limited to the spherical shape and may be a rectangular shape.

A storage space 51 inside the inner shell 3 stores the liquefied gas. An inter-shell space between the inner shell 3 and the outer shell 4 is an airtight space (hereinafter referred to as a cold insulation space 52). Thermal insulation is located in the cold insulation space 52. Moreover, the cold insulation space 52 is filled with a gas having a boiling point that is equal to or higher than a boiling point of the liquefied gas stored in the storage space 51. In the present embodiment, a vaporized gas of the liquefied gas in the storage space 51 is filled in the cold insulation space 52. This vaporized gas is combustible. As above, when the gas filled in the storage space 51 and the gas filled in the cold insulation space 52 are the same as each other, the cold insulation space 52 may communicate with the storage space 51 in the inner shell 3.

A space between the outer shell 4 and the outermost shell 15 is a substantially sealed space (hereinafter referred to as a "holding space 53"). The holding space 53 is filled with an incombustible gas such as a nitrogen gas or an inert gas, a flame-retardant gas, or dry air. The holding space 53 according to the present embodiment is filled with the nitrogen gas.

The inner shell 3 includes an inner shell main body 31 and an inner shell projecting portion 32 projecting upward from a top portion of the inner shell main body 31. In order that a pipe extending through the inside of the inner shell 3 is directly exposed to the outside without extending through another space, the inner shell projecting portion 32 includes a space that projects toward an exposure space located above the tank cover 12 and communicates with the inside of the inner shell 3. The inner shell projecting portion 32 has a dome shape and is typically called an inner shell dome. The inner shell projecting portion 32 includes: a tubular peripheral wall extending upward from the inner shell main body 31; and a ceiling wall that closes an upper opening of the peripheral wall. An upper portion of the inner shell projecting portion 32 projects upward beyond the tank cover 12 and is exposed to the outside.

The inner shell 3 includes a tower 20 that extends from a top portion of the inner shell projecting portion 32 to a bottom portion of the inner shell main body 31. Although not shown, a pump that pumps up the liquefied gas is located at a lower portion in the tower 20. A liquid transfer pipe and an electric pipe are connected to the pump. The liquid transfer pipe and the electric pipe extend through the inside of the tower 20, penetrate the inner shell projecting portion 32, and extend to the outside. However, the pump located at the bottom portion of the tower 20 may be omitted. The inner shell 3 includes at least one inner shell pipe 91 through which the inside of the inner shell 3 and the outside of the multiple-shell tank 2 communicate with each other. One end portion of the inner shell pipe 91 is open at the inside of the inner shell 3. The inner shell pipe 91 penetrates the inner shell 3 (or both the inner shell 3 and the outer shell 4) and extends to the outside. The inner shell pipe 91 may penetrate the tower 20. In FIG. 2, one inner shell pipe 91 is representatively shown. However, the multiple-shell tank 2 may include the inner shell pipes 91. The inner shell pipe 91 is, for example, a gas transfer pipe through which a boil off gas generated by vaporization of the liquefied gas in the inner shell 3 is guided from the inner shell 3 to another device located outside the multiple-shell tank 2. Examples of such device include a propulsion engine, a power generation engine, a reliquefying device, and an atmosphere open device. However, the inner shell pipe 91 is not limited to the gas transfer pipe and may be, for example, a liquid transfer pipe through which a cargo is transferred, a sampling pipe, a spray pipe, or the like.

At least one inter-shell pipe 92 extends through the cold insulation space 52 between the inner shell 3 and the outer shell 4. In FIG. 2, one inter-shell pipe 92 is representatively shown. However, the multiple-shell tank 2 may include the inter-shell pipes 92. The inter-shell pipe 92 may be suitably supported by a structural member located in the cold insulation space 52. The inter-shell pipe 92 extends through a space between the inner shell main body 31 and an outer shell main body 41, penetrates at least one of the inner shell 3 and the outer shell 4, and extends to the outside. One end portion of the inter-shell pipe 92 may be open at an arbitrary position between the inner shell main body 31 and the outer shell main body 41 in the cold insulation space 52. The inter-shell pipe 92 may branch and/or merge in the cold insulation space 52. The inter-shell pipe 92 may be a liquid transfer pipe, a gas transfer pipe, or an electric pipe. Moreover, when the inter-shell pipe 92 is the liquid transfer pipe or the gas transfer pipe, the inter-shell pipe 92 may supply a gas or a liquid to the cold insulation space 52 or may discharge a gas or a liquid from the cold insulation space 52. Specific examples of the inter-shell pipe 92 include a purge pipe, a sampling pipe, and a gas supply pipe.

A portion of each of the inner shell 3 and the outer shell 4 through which a pipe, such as the inter-shell pipe 92, penetrates is referred to as a pipe penetrating portion for convenience sake. The pipe penetrating portion is subjected to airtight processing to secure airtightness between the shell and the pipe. Moreover, the pipe penetrating portion is subjected to heat preventing processing as with the shell.

### Piping Structure

Hereinafter, First to Fifth Examples of the piping structure by which mainly the inter-shell pipe 92 is located in the multiple-shell tank 2 will be described.

### First Example of Piping Structure

In the multiple-shell tank 2A shown in FIG. 2, the outer shell 4 includes the outer shell main body 41 and an outer shell projecting portion 42 projecting upward from a top portion of the outer shell main body 41. In order that a pipe extending through the cold insulation space 52 between the inner shell 3 and the outer shell 4 is directly exposed to the outside without extending through another space, the outer shell projecting portion 42 includes a space that projects toward the exposure space located above the tank cover 12 and communicates with the cold insulation space 52.

The outer shell projecting portion 42 is a tubular body surrounding the inner shell projecting portion 32. However, the outer shell projecting portion 42 does not have to surround an entire periphery of the inner shell projecting portion 32 and may surround at least a part of the periphery of the inner shell projecting portion 32. A top portion of the outer shell projecting portion 42 is lower than the top portion of the inner shell projecting portion 32. Therefore, the annular top portion of the outer shell projecting portion 42 appears around the top portion of the inner shell projecting portion 32. The top portion of the outer shell projecting portion 42 and part (upper portion) of a side portion of the outer shell projecting portion 42 are referred to as an outer shell exposed portion 43 that is exposed to an upper side beyond the tank cover 12. However, as long as the outer shell projecting portion 42 includes the outer shell exposed portion 43, the height of the top portion of the outer shell projecting portion 42 may be equal to or higher than the height of the top portion of the inner shell projecting portion 32. Moreover, as long as the outer shell exposed portion 43 is exposed to the exposure space (atmosphere), a cover or a roof may be located around the outer shell exposed portion 43.

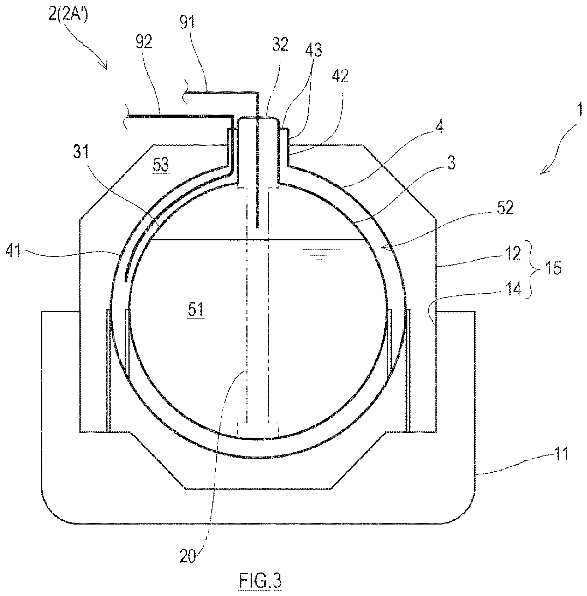

The inter-shell pipe 92 extends through the space between the inner shell main body 31 and the outer shell main body 41 and a space between the inner shell projecting portion 32 and the outer shell projecting portion 42, penetrates the outer shell exposed portion 43, and extends to the outside. To be specific, the pipe penetrating portion for the inter-shell pipe 92 is located at the outer shell exposed portion 43 of the outer shell projecting portion 42. In the multiple-shell tank 2A shown in FIG. 2, the pipe penetrating portion is located at the outer shell exposed portion 43 of the side portion of the outer shell projecting portion 42. However, as in a multiple-shell tank 2A' shown in FIG. 3, the pipe penetrating portion may be located at the outer shell exposed portion 43 of the top portion of the outer shell projecting portion 42. FIG. 3 is a schematic sectional view of the multiple-shell tank 2A' to which the piping structure according to First Example is applied.

In each of the multiple-shell tanks 2A and 2A' configured as above, the pipe penetrating portion for the inter-shell pipe 92 is located at the outer shell projecting portion 42. The pipe penetrating portions for the pipes extending through the tower 20 and including the inner shell pipe 91 are collectively located at the inner shell projecting portion 32. The outer shell projecting portion 42 surrounds a side portion of the inner shell projecting portion 32. The inner shell projecting portion 32 and the outer shell projecting portion 42 are adequately close to each other. Therefore, in each of the multiple-shell tanks 2A and 2A', the pipe penetrating portion located at the outer shell projecting portion 42 and the pipe penetrating portions of the inner shell projecting portion 32 can be regarded as being collectively located. To be specific, by the above piping structure, the pipe penetrating portions of each of the multiple-shell tanks 2A and 2A' can be collectively located. Each of the pipe penetrating portions is subjected to the airtight processing, the heat preventing processing, and reinforcement, and then, is subjected to strength evaluation. Since the pipe penetrating portions are collectively located, the improvement of the work efficiency can be expected. Moreover, the pipe penetrating portions and valves, meters, and the like located at the pipes extending through the pipe penetrating portions are inspected at the time of the maintenance. Since the pipe penetrating portions are collectively located, maintenance targets are collectively located, and therefore, the improvements of the ease of maintenance and the accessibility can be expected.

Moreover, in each of the multiple-shell tanks 2A and 2A' configured as above, the inter-shell pipe 92 extends through only the cold insulation space 52 and does not extend through the storage space 51 and the holding space 53. Therefore, if the inter-shell pipe 92 is, for example, damaged, a fluid flowing through the inter-shell pipe 92 leaks to the cold insulation space 52 or to the outside and does not leak to the storage space 51 and the holding space 53. Thus, when the fluid flowing through the inter-shell pipe 92 is a combustible gas, the above piping structure is especially useful.

### Second Example of Piping Structure

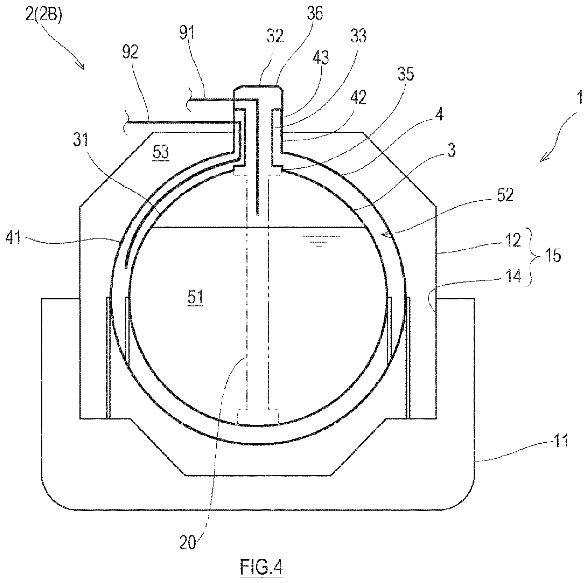

FIG. 4 is a schematic sectional view of a multiple-shell tank 2B to which the piping structure according to Second Example is applied. In the multiple-shell tank 2B shown in FIG. 4, the inner shell projecting portion 32 includes a neck portion 33 located between a base portion 35 and a top portion 36 in an upper-lower direction. The base portion 35 is a connection portion connected to the inner shell main body 31. The neck portion 33 is smaller in diameter than each of the top portion 36 and base portion 35 of the inner shell projecting portion 32. The neck portion 33 may be located at an entire outer periphery of the inner shell projecting portion 32. Or, the neck portions 33 may be dispersedly located at the outer periphery of the inner shell projecting portion 32.

The outer shell 4 includes the outer shell main body 41 and the outer shell projecting portion 42 projecting upward from the top portion of the outer shell main body 41. The outer shell projecting portion 42 has a tubular shape surrounding the neck portion 33 of the inner shell projecting portion 32. The outer diameter of the outer shell projecting portion 42 is substantially equal to the outer diameter of the top portion 36 of the inner shell projecting portion 32. The neck portion 33 of the inner shell projecting portion 32 and the outer shell projecting portion 42 are spaced apart from each other. However, the outer diameter of the outer shell projecting portion 42 and the outer diameter of the top portion 36 of the inner shell projecting portion 32 may be different from each other. Part of the side portion of the outer shell projecting portion 42 is the outer shell exposed portion 43 that is exposed to the upper side beyond the tank cover 12.

The inter-shell pipe 92 extends through the space between the inner shell main body 31 and the outer shell main body 41 and a space between the neck portion 33 of the inner shell projecting portion 32 and the outer shell projecting portion 42, penetrates the outer shell exposed portion 43 of the outer shell projecting portion 42, and extends to the outside. The pipe penetrating portion for the inter-shell pipe 92 is located at the outer shell exposed portion 43 of the side portion of the outer shell projecting portion 42. As above, in the multiple-shell tank 2B, the inter-shell pipe 92 extends through only the cold insulation space 52 and does not extend through the storage space 51 and the holding space 53.

The multiple-shell tank 2B including the piping structure according to Second Example has the following operational advantages in addition to the operational advantages of the multiple-shell tanks 2A and 2A' each including the piping structure according to First Example. To be specific, although the outer shell projecting portion 42 and the inner shell projecting portion 32 include respective exposed portions that are independent from each other, the total volume of the outer shell projecting portion 42 and the inner shell projecting portion 32 can be reduced.

### Third Example of Piping Structure

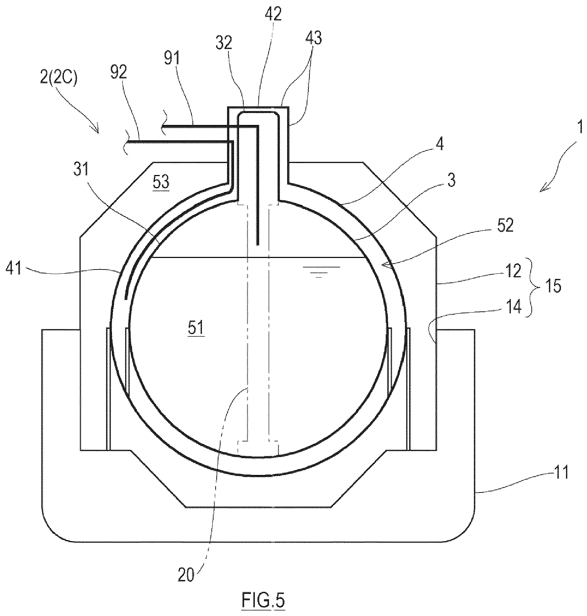

FIG. 5 is a schematic sectional view of a multiple-shell tank 2C to which the piping structure according to Third Example is applied. In the multiple-shell tank 2C shown in FIG. 5, the outer shell 4 includes the outer shell main body 41 and the outer shell projecting portion 42 projecting upward from the top portion of the outer shell main body 41. The outer shell projecting portion 42 has a dome shape that completely surrounds the entire inner shell projecting portion 32. The top portion of the outer shell projecting portion 42 and part of the side portion of the outer shell projecting portion 42 are referred to as the outer shell exposed portion 43 that is exposed to the upper side beyond the tank cover 12. The outer diameter of the outer shell projecting portion 42 is larger than the outer diameter of the inner shell projecting portion 32. The inner shell projecting portion 32 and the outer shell projecting portion 42 are spaced apart from each other.

The inter-shell pipe 92 extends through the space between the inner shell main body 31 and the outer shell main body 41 and the space between the inner shell projecting portion 32 and the outer shell projecting portion 42, penetrates the outer shell exposed portion 43 of the outer shell projecting portion 42, and extends to the outside. The pipe penetrating portion for the inter-shell pipe 92 is located at the outer shell exposed portion 43 of the outer shell projecting portion 42. In FIG. 5, the pipe penetrating portion is located at the outer shell exposed portion 43 of the side portion of the outer shell projecting portion 42. However, the pipe penetrating portion may be located at the outer shell exposed portion 43 of the top portion of the outer shell projecting portion 42. The inter-shell pipe 92 extends through only the cold insulation space 52 in the multiple-shell tank 2C and does not extend through the storage space 51 and the holding space 53.

The multiple-shell tank 2C including the piping structure according to Third Example has the following operational advantages in addition to the operational advantages of the multiple-shell tanks 2A and 2A' each including the piping structure according to First Example. To be specific, since the entire inner shell projecting portion 32 is covered with the outer shell projecting portion 42, a cold insulation layer is located at an entire periphery of the inner shell projecting portion 32.

### Fourth Example of Piping Structure

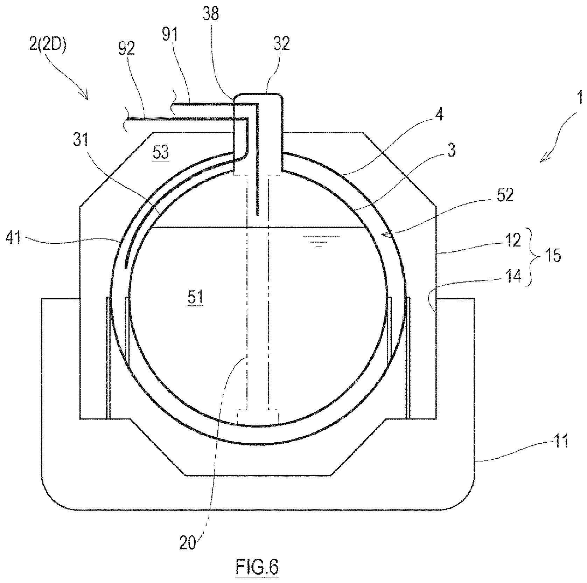

FIG. 6 is a schematic sectional view of a multiple-shell tank 2D to which the piping structure according to Fourth Example is applied. In the multiple-shell tank 2D shown in FIG. 6, the outer shell 4 includes the outer shell main body 41. The outer shell main body 41 and a side surface of the inner shell projecting portion 32 are airtightly connected to each other.

The inter-shell pipe 92 extends through the space between the inner shell main body 31 and the outer shell main body 41, penetrates the inner shell projecting portion 32, extends through the inside of the inner shell projecting portion 32, penetrates an exposed portion of the inner shell projecting portion 32, and extends to the outside. The pipe penetrating portions for the inter-shell pipe 92 are located at the exposed portion of the inner shell projecting portion 32 and a portion of the inner shell projecting portion 32 which is exposed to the cold insulation space 52. In FIG. 6, the pipe penetrating portion is located at the outer shell exposed portion 43 of the side surface of the inner shell projecting portion 32. However, the pipe penetrating portion may be located at the exposed portion of the top portion of the inner shell projecting portion 32.

In the multiple-shell tank 2D configured as above, the pipe penetrating portion for the inter-shell pipe 92 is located at the inner shell projecting portion 32. Moreover, the pipe penetrating portions for the pipes extending through the tower 20 and including the inner shell pipe 91 are collectively located at the inner shell projecting portion 32. As above, the pipe penetrating portions for the pipes including the inter-shell pipe 92 are collectively located at the inner shell projecting portion 32. To be specific, by the above piping structure, the pipe penetrating portions of the multiple-shell tank 2D can be collectively located. Each of the pipe penetrating portions is subjected to the airtight processing, the heat preventing processing, and the reinforcement, and then, is subjected to the strength evaluation. Since the pipe penetrating portions are collectively located, the improvement of the work efficiency can be expected. Moreover, the pipe penetrating portions and valves, meters, and the like located at the pipes extending through the pipe penetrating portions are inspected at the time of the maintenance. Since the pipe penetrating portions are collectively located, maintenance targets are collectively located, and therefore, the improvements of the ease of maintenance and the accessibility can be expected.

Moreover, in the multiple-shell tank 2D configured as above, the inter-shell pipe 92 extends through the cold insulation space 52 and the storage space 51 and does not extend through the holding space 53. Therefore, if the inter-shell pipe 92 is, for example, damaged, the fluid flowing through the inter-shell pipe 92 leaks to the storage space 51, the cold insulation space 52, or the outside, and does not leak to the holding space 53. Thus, when the fluid flowing through the inter-shell pipe 92 is the same as the vaporized gas of the liquefied gas stored in the storage space 51, the above piping structure is especially useful.

### Fifth Example of Piping Structure

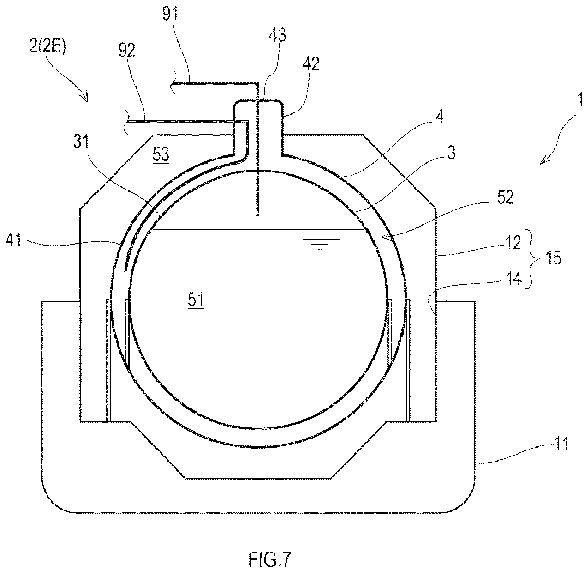

FIG. 7 is a schematic sectional view of a multiple-shell tank 2E to which the piping structure according to Fifth Example is applied. In the multiple-shell tank 2E shown in FIG. 7, the inner shell 3 includes the inner shell main body 31 and does not include the inner shell projecting portion 32. The outer shell 4 includes the outer shell main body 41 and the outer shell projecting portion 42 projecting upward from the top portion of the outer shell main body 41. The outer shell projecting portion 42 has a dome shape. The top portion of the outer shell projecting portion 42 and part of the side portion of the outer shell projecting portion 42 are referred to as the outer shell exposed portion 43 that is exposed to the outside of the tank cover 12.

The inter-shell pipe 92 extends through the space between the inner shell main body 31 and the outer shell main body 41 and an inside of the outer shell projecting portion 42, penetrates the outer shell exposed portion 43 of the outer shell projecting portion 42, and extends to the outside. In FIG. 7, the pipe penetrating portion for the inter-shell pipe 92 is located at the outer shell exposed portion 43 of the side portion of the outer shell projecting portion 42. However, the pipe penetrating portion for the inter-shell pipe 92 may be located at the outer shell exposed portion 43 of the top portion of the outer shell projecting portion 42. In the multiple-shell tank 2E, the inter-shell pipe 92 extends through only the cold insulation space 52 and does not extend through the storage space 51 and the holding space 53.

The inner shell pipe 91 penetrates the inner shell main body 31, extends through the inside of the outer shell projecting portion 42, penetrates the outer shell exposed portion 43 of the outer shell projecting portion 42, and extends to the outside. In FIG. 7, the pipe penetrating portion for the inner shell pipe 91 is located at the outer shell exposed portion 43 of the top portion of the outer shell projecting portion 42. However, the pipe penetrating portion for the inner shell pipe 91 may be located at the outer shell exposed portion 43 of the side portion of the outer shell projecting portion 42. In the multiple-shell tank 2E, the inner shell pipe 91 extends through the storage space 51 and the cold insulation space 52 and does not extend through the holding space 53.

In the multiple-shell tank 2E including the piping structure according to Fifth Example, if the inter-shell pipe 92 is, for example, damaged, the fluid flowing through the inter-shell pipe 92 leaks to the cold insulation space 52 or to the outside and does not leak to the holding space 53. Similarly, if the inner shell pipe 91 is, for example, damaged, the fluid flowing through the inner shell pipe 91 leaks to the storage space 51, the cold insulation space 52, or the outside and does not leak to the holding space 53. Therefore, when the fluid filled in the cold insulation space 52 is the same as the vaporized gas of the liquefied gas stored in the storage space 51, the above piping structure is especially useful.

### Summary

As described above, each of the multiple-shell tanks 2A, 2A', 2B, and 2C including the piping structures according to First to Third Examples of the present embodiment includes: the inner shell 3; the outer shell 4 accommodating the inner shell 3; the outermost shell 15 accommodating the inner shell 3 and the outer shell 4; and the inter-shell pipe 92 extending through the space between the inner shell 3 and the outer shell 4. The inner shell 3 includes the inner shell main body 31 and the inner shell projecting portion 32 that extends from the top portion of the inner shell main body 31, penetrates the outermost shell 15, and projects to the outside of the outermost shell 15. The outer shell 4 includes the outer shell main body 41 covering the inner shell main body 31 and the outer shell projecting portion 42 that extends from the top portion of the outer shell main body 41, penetrates the outermost shell 15, projects to the outside of the outermost shell 15, and surrounds at least a part of the inner shell projecting portion 32. At least a part of the outer shell projecting portion 42 includes the outer shell exposed portion 43 that is exposed to the outside. Then, the inter-shell pipe 92 extends through the space between the inner shell main body 31 and the outer shell main body 41, extends through the space between the inner shell projecting portion 32 and the outer shell projecting portion 42, penetrates the outer shell exposed portion 43 of the outer shell projecting portion 42, and extends to the outside.

In each of the above multiple-shell tanks 2A, 2A', 2B, and 2C, the pipe penetrating portion for the inter-shell pipe 92 is located at the outer shell exposed portion 43 of the outer shell projecting portion 42. The outer shell projecting portion 42 surrounds the inner shell projecting portion 32 at which the pipe penetrating portions for the pipes extending through the inside of the inner shell 3 are collectively located. The pipe penetrating portion for the inter-shell pipe 92 is located close to the pipe penetrating portions for the pipes extending through the inside of the inner shell 3. Since the pipe penetrating portions of each of the multiple-shell tanks 2A, 2A', 2B, and 2C are collectively located, the improvement of the work efficiency at the time of the construction of the tank can be expected. Moreover, since the pipe penetrating portions are collectively located, maintenance targets are collectively located. Therefore, at the time of the maintenance of the pipe penetrating portions and valves, meters, and the like located at pipes extending through the pipe penetrating portions, the improvements of the ease of maintenance and the accessibility can be expected.

Moreover, in the multiple-shell tanks 2A, 2A', 2B, and 2C configured as above, the inter-shell pipe 92 extends through only the cold insulation space 52 and does not extend through the storage space 51 and the holding space 53. Therefore, if the inter-shell pipe 92 is, for example, damaged, the fluid flowing through the inter-shell pipe 92 does not leak to the storage space 51 and the holding space 53. Thus, when the fluid flowing through the inter-shell pipe 92 is a combustible gas as in the above embodiment, the combustible gas is prevented from flowing out to the holding space 53. Therefore, the above piping structure is especially useful.

In each of the above-described multiple-shell tanks 2A and 2A' each including the piping structure according to First Example, the inner shell projecting portion 32 projects more than the outer shell projecting portion 42, and at least one of the top portion of the outer shell projecting portion 42 and the side portion of the outer shell projecting portion 42 includes the outer shell exposed portion 43.

Moreover, in the above-described multiple-shell tank 2B including the piping structure according to Second Example, an intermediate portion of the inner shell projecting portion 32 in a projecting direction includes the neck portion 33. The outer shell projecting portion 42 surrounds the neck portion 33. The inter-shell pipe 92 extends through the space between the neck portion 33 of the inner shell projecting portion 32 and the outer shell projecting portion 42.

Moreover, the multiple-shell tank 2D including the piping structure according to Fourth Example of the present embodiment includes the inner shell 3, the outer shell 4 accommodating the inner shell 3, the outermost shell 15 accommodating the inner shell 3 and the outer shell 4, and the inter-shell pipe 92 extending through the space between the inner shell 3 and the outer shell 4. The inner shell 3 includes the inner shell main body 31 and the inner shell projecting portion 32 that extends from the top portion of the inner shell main body 31, penetrates the outer shell 4 and the outermost shell 15, and projects to the outside of the outermost shell 15. At least a part of the inner shell projecting portion 32 includes an inner shell exposed portion 38 that is exposed to the outside. The outer shell 4 includes the outer shell main body 41 covering the inner shell main body 31. Then, the inter-shell pipe 92 extends through the space between the inner shell main body 31 and the outer shell main body 41, penetrates the inner shell projecting portion 32, extends through the inside of the inner shell projecting portion 32, penetrates the inner shell exposed portion 38 of the inner shell projecting portion 32, and extends to the outside.

In the multiple-shell tank 2D configured as above, since the pipe penetrating portion for the inter-shell pipe 92 is located at the inner shell projecting portion 32, the pipe penetrating portions for the pipes including the inter-shell pipe 92 are collectively located at the inner shell projecting portion 32. Since the pipe penetrating portions of the multiple-shell tank 2D are collectively located as above, the improvement of the work efficiency at the time of the construction of the tank can be expected. Moreover, since the pipe penetrating portions are collectively located, maintenance targets are collectively located. Therefore, at the time of the maintenance of the pipe penetrating portions and valves, meters, and the like located at pipes extending through the pipe penetrating portions, the improvements of the ease of maintenance and the accessibility can be expected.

Moreover, in the multiple-shell tank 2D, the inter-shell pipe 92 extends through the cold insulation space 52 and the storage space 51 and does not extend through the holding space 53. Therefore, if the inter-shell pipe 92 is, for example, damaged, the fluid flowing through the inter-shell pipe 92 is prevented from leaking to the holding space 53. Thus, when the fluid flowing through the inter-shell pipe 92 is the combustible gas that is the same as the vaporized gas of the liquefied gas stored in the storage space 51, the combustible gas is prevented from flowing out to the holding space 53. Therefore, the above piping structure is especially useful.

Moreover, the multiple-shell tank 2E including the piping structure according to Fifth Example of the present embodiment includes: the inner shell 3; the outer shell 4 accommodating the inner shell 3; the outermost shell 15 accommodating the inner shell 3 and the outer shell 4; the inter-shell pipe 92 extending through the space between the inner shell 3 and the outer shell 4; and the inner shell pipe 91 through which the inside of the inner shell 3 and the outside communicate with each other. The inner shell 3 includes the inner shell main body 31. The outer shell 4 includes the outer shell main body 41 covering the inner shell main body 31 and the outer shell projecting portion 42 that extends from the outer shell main body 41, penetrates the outermost shell 15, and projects to the outside of the outermost shell 15. At least a part of the outer shell projecting portion 42 includes the outer shell exposed portion 43 that is exposed to the outside of the outermost shell 15. The inter-shell pipe 92 extends through the space between the inner shell main body 31 and the outer shell main body 41, extends through the inside of the outer shell projecting portion 42, penetrates the outer shell exposed portion 43 of the outer shell projecting portion 42, and extends to the outside. The inner shell pipe 91 extends through the inside of the inner shell main body 31, penetrates the inner shell main body 31, extends through the inside of the outer shell projecting portion 42, penetrates the outer shell exposed portion 43 of the outer shell projecting portion 42, and extends to the outside.

In the multiple-shell tank 2E configured as above, the pipe penetrating portions for the inter-shell pipe 92 and the inner shell pipe 91 are located at the outer shell projecting portion 42. Therefore, the pipe penetrating portions for the pipes including the inter-shell pipe 92 and the inner shell pipe 91 are collectively located at the outer shell projecting portion 42. Since the pipe penetrating portions of the multiple-shell tank 2E are collectively located, the improvement of the work efficiency at the time of the construction of the tank can be expected. Moreover, since the pipe penetrating portions are collectively located, maintenance targets are collectively located. Therefore, at the time of the maintenance of the pipe penetrating portions and valves, meters, and the like located at pipes extending through the pipe penetrating portions, the improvements of the ease of maintenance and the accessibility can be expected.

Moreover, in the multiple-shell tank 2E, the inter-shell pipe 92 extends through the cold insulation space 52 and does not extend through the holding space 53. Similarly, the inner shell pipe 91 extends through the storage space 51 and the cold insulation space 52 and does not extend through the holding space 53. Therefore, if the inter-shell pipe 92 and/or the inner shell pipe 91 are, for example, damaged, the fluid flowing through the inter-shell pipe 92 and/or the inner shell pipe 91 is prevented from flowing out to the holding space 53. Thus, when the fluid filled in the cold insulation space 52 is the same as the vaporized gas of the liquefied gas stored in the storage space 51, the above piping structure is especially useful.

Moreover, the ship 1 according to the present embodiment includes the hull 11 and the multiple-shell tank 2 (2A to 2E) supported by the hull 11. The liquefied gas is stored in the inner shell 3. The combustible gas is filled in the space between the inner shell 3 and the outer shell 4. An incombustible gas, a flame-retardant gas, or dry air is filled in the space between the outer shell 4 and the outermost shell 15. In the multiple-shell tank 2 (2A to 2E) of the above ship 1, the combustible gas filled in the space between the inner shell 3 and the outer shell 4 is prevented from leaking through the inter-shell pipe 92 to the space between the outer shell 4 and the outermost shell 15, the space being filled with the incombustible gas.

The foregoing has described a preferred embodiment of the present disclosure. Modifications of specific structures and/or functional details of the above embodiment may be included in the present disclosure as long as they are within the scope of the present invention. The above configuration may be changed as below, for example.

For example, the multiple-shell tank 2 (2A to 2E) according to the above embodiment includes two shells that are the inner shell 3 and the outer shell 4, but may include three or more shells. In this case, the present disclosure is applicable when a pair of shells that are adjacent to each other at an inside and an outside are regarded as the inner shell 3 and the outer shell 4.

For example, the multiple-shell tank 2 (2A to 2E) according to the above embodiment is a spherical (or rectangular) tank that is independent from the hull 11, but may be a membrane tank that utilizes the hull 11. In this case, by respectively regarding the inner shell 3, the outer shell 4, and the outermost shell 15 in the above embodiment as a membrane, an inner shell, and an outer shell (hull), the present disclosure is applicable to the membrane tank.

For example, the multiple-shell tank 2 (2A to 2E) according to the above embodiment is a cargo tank. However, the multiple-shell tank 2 (2A to 2E) does not necessarily have to be mounted as the cargo tank on the ship 1 and may be mounted as a fuel tank. Moreover, the number of multiple-shell tanks 2 (2A to 2E) mounted on the ship 1 is not specified.

## Claims

1. A multiple-shell tank (2, 2A, 2A', 2B, 2C) comprising:
an inner shell (3);
an outer shell (4) accommodating the inner shell (3);
an outermost shell (15) accommodating the inner shell (3) and the outer shell (4); and
an inter-shell pipe (92) extending through a space between the inner shell (3) and the outer shell (4), wherein:
the inner shell (3) includes an inner shell main body (31) and an inner shell projecting portion (32) that extends from the inner shell main body (31), penetrates the outermost shell (15), and projects to an outside of the outermost shell (15);
the outer shell (4) includes an outer shell main body (41) covering the inner shell main body (31) and an outer shell projecting portion (42) that penetrates the outermost shell (15), projects to the outside of the outermost shell (15), and surrounds at least a part of the inner shell projecting portion (32);
at least a part of the outer shell projecting portion (42) includes an outer shell exposed portion (43) that is exposed to the outside of the outermost shell (15); and
the inter-shell pipe (92) extends through a space between the inner shell main body (31) and the outer shell main body (41), extends through a space between the inner shell projecting portion (32) and the outer shell projecting portion (42), penetrates the outer shell exposed portion (43) of the outer shell projecting portion (42), and extends to the outside.

2. The multiple-shell tank (2, 2A, 2A') according to claim 1, wherein:
the inner shell projecting portion (32) projects more than the outer shell projecting portion (42); and
at least one of a top portion of the outer shell projecting portion (42) and a side portion of the outer shell projecting portion (42) includes the outer shell exposed portion (43).

3. The multiple-shell tank (2B) according to claim 1, wherein:
an intermediate portion of the inner shell projecting portion (32) in a projecting direction includes a neck portion (33);
the outer shell projecting portion (42) surrounds the neck portion (33); and
the inter-shell pipe (92) extends through a space between the neck portion (33) of the inner shell projecting portion (32) and the outer shell projecting portion (42).

4. A multiple-shell tank (2, 2D) comprising:
an inner shell (3);
an outer shell (4) accommodating the inner shell (3);
an outermost shell (15) accommodating the inner shell (3) and the outer shell (4); and
an inter-shell pipe (92) extending through a space between the inner shell (3) and the outer shell (4), wherein:
the inner shell (3) includes an inner shell main body (31) and an inner shell projecting portion (32) that extends from the inner shell main body (31), penetrates the outer shell (4) and the outermost shell (15), and projects to an outside of the outermost shell (15);
the outer shell (4) includes an outer shell main body (41) covering the inner shell main body (31);
at least a part of the inner shell projecting portion (32) includes an inner shell exposed portion (38) that is exposed to the outside of the outermost shell (15); and
the inter-shell pipe (92) extends through a space between the inner shell main body (31) and the outer shell main body (41), penetrates the inner shell projecting portion (32), extends through an inside of the inner shell projecting portion (32), penetrates the inner shell exposed portion (38) of the inner shell projecting portion (32), and extends to the outside.

5. A multiple-shell tank (2, 2E) comprising:
an inner shell (3);
an outer shell (4) accommodating the inner shell (3);
an outermost shell (15) accommodating the inner shell (3) and the outer shell (4);
an inter-shell pipe (92) extending through a space between the inner shell (3) and the outer shell (4); and
an inner shell pipe (91) through which an inside of the inner shell (3) and an outside communicate with each other, wherein:
the inner shell (3) includes an inner shell main body (31);
the outer shell (4) includes an outer shell main body (41) covering the inner shell main body (31) and an outer shell projecting portion (42) that extends from the outer shell main body (41), penetrates the outermost shell (15), and projects to the outside of the outermost shell (15);
at least a part of the outer shell projecting portion (42) includes an outer shell exposed portion (43) that is exposed to the outside of the outermost shell (15);
the inter-shell pipe (92) extends through a space between the inner shell main body (31) and the outer shell main body (41), extends through an inside of the outer shell projecting portion (42), penetrates the outer shell exposed portion (43) of the outer shell projecting portion (42), and extends to the outside; and
the inner shell pipe (91) extends through an inside of the inner shell main body (31), penetrates the inner shell main body (31), extends through the inside of the outer shell projecting portion (42), penetrates the outer shell exposed portion (43) of the outer shell projecting portion (42), and extends to the outside.

6. A ship (1) comprising:
a hull (11); and
the multiple-shell tank (2, 2A, 2A', 2B, 2C, 2D, 2E) according to any one of claims 1 to 5, the multiple-shell tank (2, 2A, 2A', 2B, 2C, 2D, 2E) being supported by the hull (11).

7. The ship (1) according to claim 6, wherein:
a liquefied gas is stored in the inner shell (3);
a combustible gas is filled in a space between the inner shell (3) and the outer shell (4); and
an incombustible gas, a flame-retardant gas, or dry air is filled in a space between the outer shell (4) and the outermost shell (15).

## Patentansprüche

1. Mehrmantelbehälter (2, 2A, 2A', 2B, 2C), umfassend:
einen inneren Mantel (3);
einen äußeren Mantel (4), der den inneren Mantel (3) aufnimmt;
einen äußersten Mantel (15), der den inneren Mantel (3) und den äußeren Mantel (4) aufnimmt; und
ein Zwischenmantelrohr (92), das sich durch einen Raum zwischen dem inneren Mantel (3) und dem äußeren Mantel (4) erstreckt, wobei:
der innere Mantel (3) einen inneren Mantelhauptkörper (31) und einen inneren Mantelvorsprungabschnitt (32) beinhaltet, der sich aus dem inneren Mantelhauptkörper (31) erstreckt, den äußersten Mantel (15) durchdringt und bis zu einem Äußeren des äußersten Mantels (15) vorspringt;
der äußere Mantel (4) einen äußeren Mantelhauptkörper (41), der den inneren Mantelhauptkörper (31) einschließt, und einen äußeren Mantelvorsprungabschnitt (42) beinhaltet, der den äußersten Mantel (15) durchdringt, bis zu dem Äußeren des äußersten Mantels (15) vorspringt und mindestens einen Teil des inneren Mantelvorsprungabschnitts (32) umgibt;
mindestens ein Teil des äußeren Mantelvorsprungabschnitts (42) einen ausgesetzten äußeren Mantelabschnitt (43) beinhaltet, der dem Äußeren des äußersten Mantels (15) ausgesetzt ist; und
das Zwischenmantelrohr (92) sich durch einen Raum zwischen dem inneren Mantelhauptkörper (31) und dem äußeren Mantelhauptkörper (41) erstreckt, sich durch einen Raum zwischen dem inneren Mantelvorsprungabschnitt (32) und dem äußeren Mantelvorsprungabschnitt (42) erstreckt, den ausgesetzten äußeren Mantelabschnitt (43) des äußeren Mantelvorsprungabschnitts (42) durchdringt und sich bis zu dem Äußeren erstreckt.

2. Mehrmantelbehälter (2, 2A, 2A') nach Anspruch 1, wobei:
der innere Mantelvorsprungabschnitt (32) weiter als der äußere Mantelvorsprungabschnitt (42) vorspringt; und
mindestens einer von einem oberen Abschnitt des äußeren Mantelvorsprungabschnitts (42) und einem seitlichen Abschnitt des äußeren Mantelvorsprungabschnitts (42) den ausgesetzten äußeren Mantelabschnitt (43) beinhaltet.

3. Mehrmantelbehälter (2B) nach Anspruch 1, wobei:
ein Zwischenabschnitt des inneren Mantelvorsprungabschnitts (32) in einer vorspringenden Richtung einen Halsabschnitt (33) beinhaltet;
der äußere Mantelvorsprungabschnitt (42) den Halsabschnitt (33) umgibt; und
das Zwischenmantelrohr (92) sich durch einen Raum zwischen dem Halsabschnitt (33) des inneren Mantelvorsprungabschnitts (32) und dem äußeren Mantelvorsprungabschnitt (42) erstreckt.

4. Mehrmantelbehälter (2, 2D), umfassend:
einen inneren Mantel (3);
einen äußeren Mantel (4), der den inneren Mantel (3) aufnimmt;
einen äußersten Mantel (15), der den inneren Mantel (3) und den äußeren Mantel (4) aufnimmt; und
ein Zwischenmantelrohr (92), das sich durch einen Raum zwischen dem inneren Mantel (3) und dem äußeren Mantel (4) erstreckt, wobei:
der innere Mantel (3) einen inneren Mantelhauptkörper (31) und einen inneren Mantelvorsprungabschnitt (32) beinhaltet, der sich aus dem inneren Mantelhauptkörper (31) erstreckt, den äußeren Mantel (4) und den äußersten Mantel (15) durchdringt und bis zu einem Äußeren des äußersten Mantels (15) vorspringt;
der äußere Mantel (4) einen äußeren Mantelhauptkörper (41) beinhaltet, der den inneren Mantelhauptkörper (31) einschließt;
mindestens ein Teil des inneren Mantelvorsprungabschnitts (32) einen ausgesetzten inneren Mantelabschnitt (38) beinhaltet, der dem Äußeren des äußersten Mantels (15) ausgesetzt ist; und
das Zwischenmantelrohr (92) sich durch einen Raum zwischen dem inneren Mantelhauptkörper (31) und dem äußeren Mantelhauptkörper (41) erstreckt, den inneren Mantelvorsprungabschnitt (32) durchdringt, sich durch ein Inneres des inneren Mantelvorsprungabschnitts (32) erstreckt, den ausgesetzten inneren Mantelabschnitt (38) des inneren Mantelvorsprungabschnitts (32) durchdringt und sich bis zu dem Äußeren erstreckt.

5. Mehrmantelbehälter (2, 2E), umfassend:
einen inneren Mantel (3);
einen äußeren Mantel (4), der den inneren Mantel (3) aufnimmt;
einen äußersten Mantel (15), der den inneren Mantel (3) und den äußeren Mantel (4) aufnimmt;
ein Zwischenmantelrohr (92), das sich durch einen Raum zwischen dem inneren Mantel (3) und dem äußeren Mantel (4) erstreckt; und
ein inneres Mantelrohr (91), durch das ein Inneres des inneren Mantels (3) und ein Äußeres miteinander in Verbindung stehen, wobei:
der innere Mantel (3) einen inneren Mantelhauptkörper (31) beinhaltet;
der äußere Mantel (4) einen äußeren Mantelhauptkörper (41), der den inneren Mantelhauptkörper (31) einschließt, und einen äußeren Mantelvorsprungabschnitt (42) beinhaltet, der sich aus dem äußeren Mantelhauptkörper (41) erstreckt, den äußersten Mantel (15) durchdringt und bis zu dem Äußeren des äußersten Mantels (15) vorsteht;
mindestens ein Teil des äußeren Mantelvorsprungabschnitts (42) einen ausgesetzten äußeren Mantelabschnitt (43) beinhaltet, der dem Äußeren des äußersten Mantels (15) ausgesetzt ist;
das Zwischenmantelrohr (92) sich durch einen Raum zwischen dem inneren Mantelhauptkörper (31) und dem äußeren Mantelhauptkörper (41) erstreckt, sich durch ein Inneres des äußeren Mantelvorsprungabschnitts (42) erstreckt, den ausgesetzten äußeren Mantelabschnitt (43) des äußeren Mantelvorsprungabschnitts (42) durchdringt und sich bis zu dem Äußeren erstreckt; und
das innere Mantelrohr (91) sich durch ein Inneres des inneren Mantelhauptkörpers (31) erstreckt, den inneren Mantelhauptkörper (31) durchdringt, sich durch das Innere des äußeren Mantelvorsprungabschnitts (42) erstreckt, den ausgesetzten äußeren Mantelabschnitt (43) des äußeren Mantelvorsprungabschnitts (42) durchdringt und sich bis zu dem Äußeren erstreckt.

6. Schiff (1), umfassend:
einen Rumpf (11); und
den Mehrmantelbehälter (2, 2A, 2A', 2B, 2C, 2D, 2E) nach einem der Ansprüche 1 bis 5, wobei der Mehrmantelbehälter (2, 2A, 2A', 2B, 2C, 2D, 2E) durch den Rumpf (11) getragen wird.

7. Schiff (1) nach Anspruch 6, wobei:
ein verflüssigtes Gas in dem inneren Mantel (3) gespeichert wird;
ein brennbares Gas in einen Raum zwischen dem inneren Mantel (3) und dem äußeren Mantel (4) eingefüllt wird; und
ein unbrennbares Gas, ein flammwidriges Gas oder trockene Luft in einen Raum zwischen dem äußeren Mantel (4) und dem äußersten Mantel (15) eingefüllt wird.

## Revendications

1. Réservoir à enveloppes multiples (2, 2A, 2A', 2B, 2C) comprenant :
une enveloppe interne (3) ;
une enveloppe externe (4) abritant l'enveloppe interne (3) ;
une enveloppe la plus externe (15) abritant l'enveloppe interne (3) et l'enveloppe externe (4) ; et
un tuyau d'entre enveloppes (92) s'étendant à travers un espace entre l'enveloppe interne (3) et l'enveloppe externe (4), dans lequel :
l'enveloppe interne (3) comporte un corps principal d'enveloppe interne (31) et une partie saillante d'enveloppe interne (32) qui s'étend à partir du corps principal d'enveloppe interne (31), pénètre dans l'enveloppe la plus externe (15), et fait saillie vers un extérieur de l'enveloppe la plus externe (15) ;
l'enveloppe externe (4) comporte un corps principal d'enveloppe externe (41) couvrant le corps principal d'enveloppe interne (31) et une partie saillante d'enveloppe externe (42) qui pénètre dans l'enveloppe la plus externe (15), fait saillie vers l'extérieur de l'enveloppe la plus externe (15), et entoure au moins une partie de la partie saillante d'enveloppe interne (32) ;
au moins une partie de la partie saillante d'enveloppe externe (42) comporte une partie exposée d'enveloppe externe (43) qui est exposée à l'extérieur de l'enveloppe la plus externe (15) ; et
le tuyau d'entre enveloppes (92) s'étend à travers un espace entre le corps principal d'enveloppe interne (31) et le corps principal d'enveloppe externe (41), s'étend à travers un espace entre la partie saillante d'enveloppe interne (32) et la partie saillante d'enveloppe externe (42), pénètre dans la partie exposée d'enveloppe externe (43) de la partie saillante d'enveloppe externe (42), et s'étend à l'extérieur.

2. Réservoir à enveloppes multiples (2, 2A, 2A') selon la revendication 1, dans lequel :
la partie saillante d'enveloppe interne (32) fait saillie plus que la partie saillante d'enveloppe externe (42) ; et
au moins l'une parmi une partie de dessus de la partie saillante d'enveloppe externe (42) et une partie latérale de la partie saillante d'enveloppe externe (42) comporte la partie exposée d'enveloppe externe (43).

3. Réservoir à enveloppes multiples (2B) selon la revendication 1, dans lequel :
une partie intermédiaire de la partie saillante d'enveloppe interne (32) comporte dans une direction saillante une partie col (33) ;
la partie saillante d'enveloppe externe (42) entoure la partie col (33) ; et
le tuyau d'entre enveloppes (92) s'étend à travers un espace entre la partie col (33) de la partie saillante d'enveloppe interne (32) et la partie saillante d'enveloppe externe (42).

4. Réservoir à enveloppes multiples (2, 2D) comprenant :
une enveloppe interne (3) ;
une enveloppe externe (4) abritant l'enveloppe interne (3) ;
une enveloppe la plus externe (15) abritant l'enveloppe interne (3) et l'enveloppe externe (4) ; et
un tuyau d'entre enveloppes (92) s'étendant à travers un espace entre l'enveloppe interne (3) et l'enveloppe externe (4), dans lequel :
l'enveloppe interne (3) comporte un corps principal d'enveloppe interne (31) et une partie saillante d'enveloppe interne (32) qui s'étend à partir du corps principal d'enveloppe interne (31), pénètre dans l'enveloppe externe (4) et l'enveloppe la plus externe (15), et fait saillie vers un extérieur de l'enveloppe la plus externe (15) ;
l'enveloppe externe (4) comporte un corps principal d'enveloppe externe (41) recouvrant le corps principal d'enveloppe interne (31) ;
au moins une partie de la partie saillante d'enveloppe interne (32) comporte une partie exposée d'enveloppe interne (38) qui est exposée à l'extérieur de l'enveloppe la plus externe (15) ; et
le tuyau d'entre enveloppes (92) s'étend à travers un espace entre le corps principal d'enveloppe interne (31) et le corps principal d'enveloppe externe (41), pénètre dans la partie saillante d'enveloppe interne (32), s'étend à travers un intérieur de la partie saillante d'enveloppe interne (32), pénètre dans la partie exposée d'enveloppe interne (38) de la partie saillante d'enveloppe interne (32), et s'étend à l'extérieur.

5. Réservoir à enveloppes multiples (2, 2E) comprenant :
une enveloppe interne (3) ;
une enveloppe externe (4) abritant l'enveloppe interne (3) ;
une enveloppe la plus externe (15) abritant l'enveloppe interne (3) et l'enveloppe externe (4) ;
un tuyau d'entre enveloppes (92) s'étendant à travers un espace entre l'enveloppe interne (3) et l'enveloppe externe (4) ; et
un tuyau d'enveloppe interne (91) à travers lequel un intérieur de l'enveloppe interne (3) et un extérieur communiquent entre eux, dans lequel :
l'enveloppe interne (3) comporte un corps principal d'enveloppe interne (31) ;
l'enveloppe externe (4) comporte un corps principal d'enveloppe externe (41) couvrant le corps principal d'enveloppe interne (31) et une partie saillante d'enveloppe externe (42) qui s'étend à partir du corps principal d'enveloppe externe (41), pénètre dans l'enveloppe la plus externe (15), et fait saillie vers l'extérieur de l'enveloppe la plus externe (15) ;
au moins une partie de la partie saillante d'enveloppe externe (42) comporte une partie exposée d'enveloppe externe (43) qui est exposée à l'extérieur de l'enveloppe la plus externe (15) ;
le tuyau d'entre enveloppes (92) s'étend à travers un espace entre le corps principal d'enveloppe interne (31) et le corps principal d'enveloppe externe (41), s'étend à travers un intérieur de la partie saillante d'enveloppe externe (42), pénètre dans la partie exposée d'enveloppe externe (43) de la partie saillante d'enveloppe externe (42), et s'étend à l'extérieur ; et
le tuyau d'enveloppe interne (91) s'étend à travers un intérieur du corps principal d'enveloppe interne (31), pénètre dans le corps principal d'enveloppe interne (31), s'étend à travers l'intérieur de la partie saillante d'enveloppe externe (42), pénètre dans la partie exposée d'enveloppe externe (43) de la partie saillante d'enveloppe externe (42), et s'étend à l'extérieur.

6. Navire (1) comprenant :
une coque (11) ; et
le réservoir à enveloppes multiples (2, 2A, 2A', 2B, 2C, 2D, 2E) selon l'une quelconque des revendications 1 à 5, le réservoir à enveloppes multiples (2, 2A, 2A', 2B, 2C, 2D, 2E) étant supporté par la coque (11).

7. Navire (1) selon la revendication 6, dans lequel :
un gaz liquéfié est stocké dans l'enveloppe interne (3) ;
un gaz combustible est rempli dans un espace entre l'enveloppe interne (3) et l'enveloppe externe (4) ; et
un gaz non combustible, un gaz retardateur de flammes ou de l'air sec est rempli dans un espace entre l'enveloppe externe (4) et l'enveloppe la plus externe (15).
